# EUROPÄISCHE PATENTSCHRIFT

(11) **EP 4 351 901 B1**
(45) Veröffentlichungstag und Bekanntmachung des Hinweises auf die Patenterteilung: **06.08.2025**
(21) Anmeldenummer: 22729162.2
(22) Anmeldetag: 13.05.2022
(51) Int. Cl.: B60H 1/00, B60H 1/32

(54) **WÄRMEPUMPENANORDNUNG FÜR EIN HYBRID- ODER ELEKTROFAHRZEUG**
HEAT PUMP ASSEMBLY FOR A HYBRID OR ELECTRIC VEHICLE
ENSEMBLE POMPE À CHALEUR POUR VÉHICULE HYBRIDE OU ÉLECTRIQUE

(30) Priorität: 10.06.2021 DE 102021205922
(43) Veröffentlichungstag der Anmeldung: 17.04.2024
(73) Patentinhaber: Magna PT B.V. & Co. KG, 74199 Untergruppenbach (DE)
(72) Erfinder: RATHBERGER, Christian, 4040 Linz (AT)
(74) Vertreter: God, Cornelia
(86) Internationale Anmeldenummer: PCT/EP2022/063055
(87) Internationale Veröffentlichungsnummer: WO 2022/258311

(56) Entgegenhaltungen:
- WO-A1-2018/050139
- DE-A1- 102011 076 155
- DE-A1- 102017 120 195
- DE-A1- 102019 105 035
- DE-U1- 202010 007 146

## Beschreibung

### Gebiet der Erfindung

Die vorliegende Erfindung betrifft eine Wärmepumpenanordnung für ein Thermomanagementsystem eines Hybrid- oder Elektrofahrzeug umfassend einen Kältemittelkreislauf mit einem Strömungspfad für ein Kältemittel, einem Kompressor, einem Hochdruck-Kältemittelwärmetauscher, der in einen Hochtemperatur-Latentwärmespeicher integriert ist, einem Expansionselement und einem Niederdruck-Kältemittelwärmetauscher, der in einen Niedertemperatur-Latentwärmespeicher integriert ist.

### Stand der Technik

Die stetig voranschreitende Weiterentwicklung von Hybrid- oder Elektrofahrzeugen umfasst auch den Bereich des Thermomanagements eines solchen Fahrzeugs.

Hybrid- oder Elektrofahrzeuge benötigen nach heutigem Stand der Technik im Winterbetrieb bis zu 1/3 der Energiespeicherkapazität zur Erwärmung des Fahrgastraums und zur Konditionierung des Energiespeichers, in den meisten Fällen einer Batterie. Da von einem Elektromotor als Antriebsmaschine nur eine geringe Abwärme zur Verfügung gestellt wird, wird im einfachsten Fall zur Heizung des Fahrgastraums oftmals ein konventioneller elektrischer Heizwiderstand verwendet. Dies führt zu einer drastischen Verkürzung der Fahrzeugreichweite. Ein ähnliches Problem entsteht im Sommer bei der Verwendung einer konventionellen Klimaanordnung in einem Hybrid- oder Elektrofahrzeug.

Um diesen Problemen zu begegnen und so ein optimiertes Thermomanagement des Fahrzeugs zu erreichen, existieren bereits unterschiedliche Lösungsansätze. Eine Möglichkeit besteht beispielsweise in der Verwendung einer Wärmepumpe zum Heizen, wobei häufig die Klimaanlage durch zusätzliche Wärmeübertrager, Ventile und parallele Kältemittelzweige auch diesen Betriebsmodus abdeckt. Wärme kann dabei aus unterschiedlichen Quellen genutzt werden. Über eine Umgebungswärmepumpe lässt sich beispielsweise ein im Vergleich zu einer rein elektrischen Heizung wesentlich energieeffizienteres Heizen und auch Kühlen darstellen, jedoch funktionieren diese Wärmepumpen lediglich bei Umgebungstemperaturen über -5°C mit einem guten Wirkungsgrad. Abwärme-Wärmepumpen sind unabhängiger von der Umgebungstemperatur, haben aber ebenso Probleme in Kaltstart-Szenarien. Beide Varianten erhöhen aber jedenfalls die Systemkomplexität und damit auch die Kosten.

Latentwärmespeicher, auch Phasenwechselspeicher genannt, werden bereits gelegentlich im Thermalsystemen von Hybrid- und Elektrofahrzeugen verwendet, jedoch stellen insbesondere die erforderliche Größe und Masse der Latentwärmespeicher bei aktuellen Anwendungen Hindernisse für eine weitere Verbreitung dar.

Aus der DE 10 2019 105 035 A1 ist beispielsweise eine Wärmepumpenanordnung bekannt, die mit zwei Wärmetauschern arbeitet, die jeweils an einem Thermospeicher in Form eines Phasenwechslers angebunden sind. Die Anordnung dient dem Kühlen und/oder Heizen eine Fahrzeugs.

Das Dokument DE 10 2017 120 195 A1 offenbart beispielsweise ein steuerbares reversibel betreibbares Temperaturregulationssystem zur Beheizung und Kühlung von Fahrzeugen, das einen Kältemittelkreislauf mit wenigstens einem ersten Wärmespeicher mit einem Phasenwechselmaterial und wenigstens einen zweiten Wärmespeicher mit einem Phasenwechselmaterial aufweist. Weiterhin umfasst der Kältemittelkreislauf wenigstens einen ersten Wärmeübertrager und wenigstens einen zweiten Wärmeübertrager.

Die Druckschrift WO 2018/050139 A1 offenbart beispielsweise eine Heizungsanlage für ein zumindest teilweise elektrisch antreibbares Fahrzeug, wobei die Heizungsanlage mindestens einen Wärmespeicher und mindestens eine Heizeinrichtung mit mindestens einem Wärmetauscher aufweist. Die mindestens eine Heizeinrichtung ist zumindest thermisch mit dem mindestens einen Wärmespeicher gekoppelt.

Die DE 20 2010 007 146 U1 beschreibt beispielsweise ein Elektrofahrzeug, mit einem Fahrgastraum, einer Temperierungseinrichtung zur Temperierung des Fahrgastraums, und wenigstens einem ersten und wenigstens einem zweiten Latentwärmespeicher, die jeweils ein Speichermedium aufweisen, wobei die Temperierungseinrichtung eine Wärmepumpe mit einer Warmseite und einer Kaltseite aufweist, wobei das Speichermedium des ersten Latentwärmespeichers zum Abkühlen des Speichermediums des ersten Latentwärmespeichers mit der Kaltseite wärmeübertragend verbunden ist und wobei das Speichermedium des zweiten Latentwärmespeichers zum Erwärmen des Speichermediums des zweiten Latentwärmespeichers mit der Warmseite wärmeübertragend verbunden ist.

### Zusammenfassung der Erfindung

Es ist eine Aufgabe der Erfindung eine alternative Wärmepumpenanordnung für ein Thermomanagementsystem eines Hybrid- oder Elektrofahrzeug anzugeben, die sich zum einen durch einen energieeffizienten Betrieb und zum anderen durch einen leistungs-, bauraum- sowie kostenoptimierten Aufbau auszeichnet.

Dieser Bedarf kann durch den Gegenstand der vorliegenden Erfindung gemäß dem unabhängigen Anspruch 1 gedeckt werden. Vorteilhafte Ausführungsformen der vorliegenden Erfindung sind in den abhängigen Ansprüchen beschrieben.

Die erfindungsgemäße Wärmepumpenanordnung soll insbesondere in einem Hybrid- oder Elektrofahrzeug zum Einsatz kommen, sie kann jedoch auch in jedem anderen gängigen Fahrzeug Anwendung finden.

Entsprechend der vorliegenden Erfindung umfasst die Wärmepumpenanordnung einen Kältemittelkreislauf. Der Kältemittelkreislauf weist einen Strömungspfad für ein Kältemittel, einen Kompressor, einen Hochdruck-Kältemittelwärmetauscher, ein Expansionselement und einen Niederdruck-Kältemittelwärmetauscher auf.

Hinsichtlich des verwendeten Kältemittels gibt es keine prinzipbedingten Einschränkungen. Einerseits können im Automobilbereich gebräuchliche Standard-Kältemittel, wie beispielsweise "R1234yf", verwendet werden, andererseits ist auch eine Anpassung an spezielle Betriebsanforderungen, wie Druck- und Temperaturniveaus auf heißer und kalter Seite der Wärmepumpe, durch die Wahl alternativer Kältemittel möglich.

Der Kompressor dient der Verdichtung des Kältemittels von einem Niederdruckniveau auf ein Hochdruckniveau. Der Kompressor kann dabei in unterschiedlichen Bauweisen ausgeführt sein, ohne das Grundprinzip der Erfindung zu beeinflussen. Bevorzugt ist der Kompressor als Turbokompressor in beliebiger Ausführung ausgeführt. Der Kompressor arbeitet in einem weitestgehend konstanten, hoch optimierten Betriebspunkt, sodass eine Effizienzsteigerung gegenüber herkömmlichen Systemen erreicht werden kann.

Der Hochdruck-Kältemittelwärmetauscher dient der Abgabe von Wärme des Kältemittels, wobei der Hochdruck-Kältemittelwärmetauscher in einen Hochtemperatur-Latentwärmespeicher integriert ist. Der Schmelzpunkt des Hochtemperatur-Latentwärmespeichers ist dabei so gewählt, dass einerseits die Wärmepumpenanordnung in Abstimmung mit dem gewählten Kältemittel und der Auslegung des Kompressors in einem hocheffizienten Betriebspunkt operieren kann und andererseits das Temperaturniveau zu den Anforderungen eines Thermomanagementsystems eines Fahrzeugs passt.

Das Expansionselement dient der Entspannung des gekühlten Kältemittels auf das Niederdruckniveau.

Der Niederdruck-Kältemittelwärmetauscher dient der Aufnahme von Wärme des Kältemittels, wobei der Niederdruck-Kältemittelwärmetauscher in einen Niedertemperatur-Latentwärmespeicher integriert ist. Der Schmelzpunkt dieses Niedertemperatur-Latentwärmespeichers ist wiederum auf Basis der Thermomanagementsystem-Anforderungen des Fahrzeugs sowie eines effizienten Betriebes der Wärmepumpenanordnung zu wählen.

In einem Heizbetriebsmodus ist der Hochtemperatur-Latentwärmespeicher bevorzugt mit einem Heizkreislauf eines Thermomanagementsystems eines Fahrzeugs gekoppelt, über den zumindest ein Fahrgastraum des Fahrzeugs erwärmbar ist. Außerdem kann die Wärme zur Konditionierung von Antriebsstrang, Energiespeicher oder weiteren Komponenten des Fahrzeuges verwendet werden. Die Wärmeabfuhr vom Hochtemperatur-Latentwärmespeicher in ein Kühlmittel des Heizkreislaufs des Thermomanagementsystems des Fahrzeugs erfolgt dabei über einen Hochtemperatur-Kühlmittelwärmetauscher, der ebenfalls in den Hochtemperatur-Latentwärmespeicher integriert ist. Der Hochtemperatur-Kühlmittelwärmetauscher ist in dem Hochtemperatur-Latentwärmespeicher thermisch mit dem Hochdruck-Kältemittelwärmetauscher gekoppelt.

In dem Heizbetriebsmodus sammelt der Niederdruck-Kältemittelwärmetauscher der Wärmepumpenanordnung Abwärme aus dem Fahrzeug oder auch Wärme aus der Umgebung.

In einem Kühlbetriebsmodus ist der Niedertemperatur-Latentwärmespeicher bevorzugt mit einem Kühlkreislauf des Thermomanagementsystems des Fahrzeugs gekoppelt, über den zumindest ein Fahrgastraum des Fahrzeugs kühlbar ist. Außerdem werden über den Kühlkreislauf weitere Kühlanforderungen des Fahrzeuges, beispielsweise eines Energiespeichers und/oder des Antriebsstrangs, abgedeckt. Die Wärmeaufnahme vom Niedertemperatur-Latentwärmespeicher aus einem Kühlmittel des Kühlkreislaufs des Thermomanagementsystems des Fahrzeugs erfolgt dabei über einen Niedertemperatur-Kühlmittelwärmetauscher, der ebenfalls in den Niedertemperatur-Latentwärmespeicher integriert ist. Der Niedertemperatur-Kühlmittelwärmetauscher ist in dem Niedertemperatur-Latentwärmespeicher thermisch mit dem Niederdruck-Kältemittelwärmetauscher gekoppelt.

In dem Kühlbetriebsmodus gibt der Hochdruck-Kältemittelwärmetauscher die überschüssige Wärme an die Umgebung ab. In der vorliegenden erfindungsgemäßen Ausbildung einer Wärmepumpenanordnung kann ein hocheffizienter Kompressor für das Thermomanagement eines Fahrzeugs nutzbar gemacht werden, indem dieser mit einem hochdruckseitigen und einem niederdruckseitigen Latentwärmespeicher kombiniert wird, denn derart erreicht man sowohl auf der Hochdruck- als auch auf der Niederdruckseite des Kompressors konstante Temperaturen und ermöglicht so einen Betrieb in einem konstanten, hocheffizienten Betriebspunkt der Wärmepumpenanordnung. Derart wird eine Effizienzsteigerung der Wärmepumpenanordnung und somit des Thermomanagements eines Fahrzeugs, insbesondere eines Hybrid- oder Elektrofahrzeugs erreicht - bei einem Hybrid- oder Elektrofahrzeug bedeutet dies eine Reichweitensteigerung im elektrischen Fahrbetrieb.

Im Teillastbetrieb der erfindungsgemäßen Wärmepumpenanordnung kann der Kompressor auch zeitweise abgeschaltet werden, Wärme und Kälte können aber weiterhin den beiden Latentwärmespeichern entnommen werden. Das ermöglicht einen fast geräuschlosen, sehr energiesparenden Betrieb.

Im Vollastbetrieb kann die entnommene maximale Wärme- und Kälteleistung durch die Pufferwirkung der beiden Latentwärmespeicher die eigentliche Leistung der Wärmepumpenanordnung auch temporär deutlich übersteigen, was einen weiteren erheblichen Vorteil des Systems darstellt.

Weiterhin ermöglicht die Erfindung eine gänzlich modulare Bauweise der Wärmepumpenanordnung, Kältemittelleitungen und damit auch Kältemittel-Füllmengen können minimiert werden und die Integration in Thermomanagement-Gesamtsysteme wird stark vereinfacht.

Durch die Verwendung zweier Latentwärmespeicher auf Hoch- und Niederdruckseite kann der Kompressor als zentrale Komponente des Systems in einem konstanten, energieoptimierten Betriebspunkt operieren. Dies erlaubt gegenüber herkömmlichen mobilen Anlagen deutlich gesteigerte Wirkungsgrade, insbesondere bei Verwendung eines Turbokompressors, der erst durch die Randbedingung eines konstanten Betriebspunktes überhaupt zum Einsatz kommen kann.

Bestehende technische Lösungen verwenden die Phasenübergangsmaterialien der Latentwärmespeicher ausschließlich als Wärmespeicher, die, um relevante Energiemengen aufnehmen zu können, sehr groß und schwer ausgeführt werden müssen. In der vorliegenden Erfindung kommt den Phasenübergangsmaterialien der Latentwärmespeicher primär die Rolle von Puffern zu, welche die Temperatur- und Druckniveaus des Kompressors stabilisieren und dafür deutlich kleiner und leichter ausgeführt werden können.

### Kurzbeschreibung der Zeichnungen

Die Erfindung wird im Folgenden beispielhaft unter Bezugnahme auf die Zeichnungen beschrieben.
- Fig. 1: zeigt eine schematische Darstellung einer Wärmepumpenanordnung.
- Fig. 2: zeigt eine schematische Darstellung einer erfindungsgemäßen Wärmepumpenanordnung entsprechend Fig. 1, wobei die Wärmepumpenanordnung mit einem Heiz- und einem Kühlkreislauf eines Thermomanagementsystems eines Fahrzeugs gekoppelt ist.
- Fig. 3: zeigt eine Wärmepumpenanordnung entsprechend Fig. 2 mit aktivem Kühlkreislauf.
- Fig. 4: zeigt eine Wärmepumpenanordnung entsprechend Fig. 2 mit aktivem Heizkreislauf.

### Detaillierte Beschreibung der Erfindung

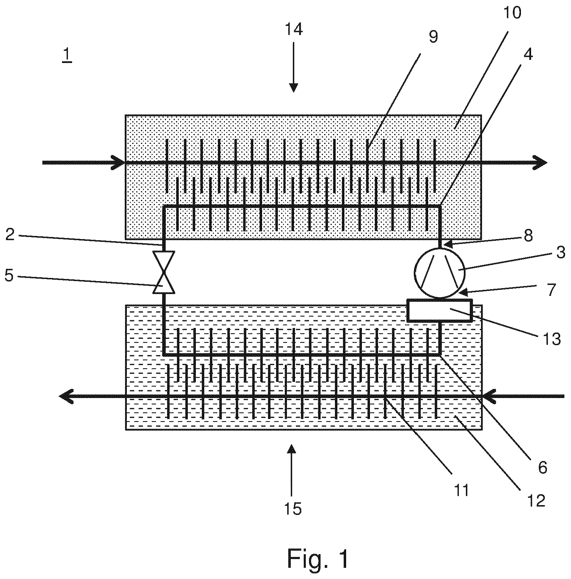

In Fig. 1 ist schematische eine Wärmepumpenanordnung 1 entsprechend der vorliegenden Erfindung dargestellt.

Die Wärmepumpenanordnung 1 ist Teil eines Thermomanagementsystems eines Fahrzeugs, wobei das Thermomanagementsystem des Fahrzeugs einen Heizkreislauf und einen Kühlkreislauf aufweist. Der Heizkreislauf wie auch der Kühlkreislauf umfassen einen Strömungspfad für ein Kühlmittel.

Die Wärmepumpenanordnung 1 umfasst einen geschlossenen Kältemittelkreislauf 2. Der Kältemittelkreislauf 2 umfasst einen Strömungspfad für ein Kältemittel, einen Kompressor 3, einen Hochdruck-Kältemittelwärmetauscher 4, ein Expansionselement 5, einen Niederdruck-Kältemittelwärmetauscher 6 und einen Akkumulator/Ausgleichsbehälter 13.

Der Hochdruck-Kältemittelwärmetauscher 4 ist in einen Hochtemperatur-Latentwärmespeicher 10 integriert und bildet funktional einen Kondensator aus.

Der Niederdruck-Kältemittelwärmetauscher 6 ist in einen Niedertemperatur-Latentwärmespeicher 12 integriert und bildet funktional einen Verdampfer aus.

Der Akkumulator/Ausgleichsbehälter 13 stellt sicher, dass der Kompressor 3 nur mit Kältemittel in der Gasphase beschickt wird.

Der Kompressor 3 ist in dem vorliegenden Ausführungsbeispiel als Turbokompressor ausgeführt, kann jedoch als jeder beliebige Kompressor ausgeführt sein. Der Kompressor 3 weist einen niederdruckseitigen, also verdampferseitigen, Niederdruckeingang 7 und einen hochdruckseitigen, also kondensatorseitigen, Hochdruckausgang 8 auf.

Das Expansionselement 5 ist entweder als regelbares Ventil oder als eine Drossel ausgeführt.

Im Betrieb der Wärmepumpenanordnung 1 saugt der Kompressor 3 über den Niederdruckeingang 7 Kältemittel auf Niederdruckniveau aus dem Akkumulator/Ausgleichsbehälter 13 an. Das dem Kompressor 3 über den Niederdruckeingang 7 zugeführte Kältemittel wird durch den Kompressor 3 komprimiert und derart auf ein Hochdruckniveau gebracht. Das Kältemittel auf Hochdruckniveau wird über den Hochdruckausgang 8 dem Hochdruck-Wärmetauscher 4 zugeführt, wo es unter Wärmeabgabe an den Hochtemperatur-Latentwärmespeicher 10 abgekühlt wird. Über das Expansionselement 5 wird das seitens des Hochdruck-Kältemittelwärmetauschers 4 gekühlte Kältemittel auf ein Niederdruckniveau entspannt. Anschließend wird das Kältemittel in dem Niederdruck-Kältemittelwärmetauscher 6 unter Wärmeaufnahme wieder erwärmt und dem Akkumulator 13 zugeführt.

In den Hochtemperatur-Latentwärmespeicher 10 ist neben dem Hochdruck-Kältemittelwärmetauscher 4 auch ein Hochtemperatur-Kühlmittelwärmetauscher 9 integriert, der Teil des Heizkreislaufs des Thermomanagementsystems des Fahrzeugs ist.

In den Niedertemperatur-Latentwärmespeicher 12 ist neben dem Niederdruck-Kältemittelwärmetauscher 6 auch ein Niedertemperatur-Kühlmittelwärmetauscher 11 integriert, der Teil des Kühlkreislaufs des Thermomanagementsystems des Fahrzeugs ist.

Das Thermomanagementsystem des Fahrzeugs kann dabei über den Niedertemperatur-Kühlmittelwärmetauscher 11 durch den Niedertemperatur-Latentwärmespeicher 12 gekühlt und über den Hochtemperatur-Kühlmittelwärmetauscher 9 durch den Hochtemperatur-Latentwärmespeicher 10 geheizt werden.

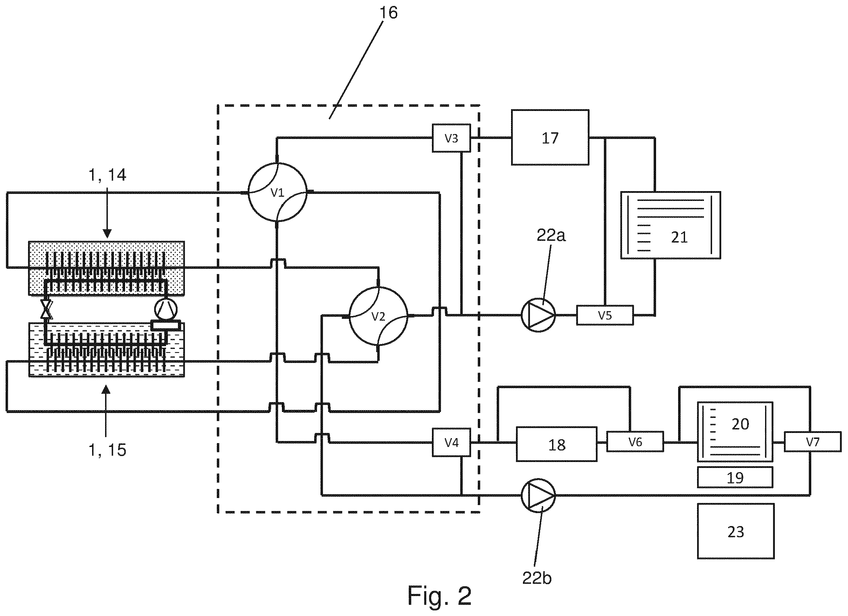

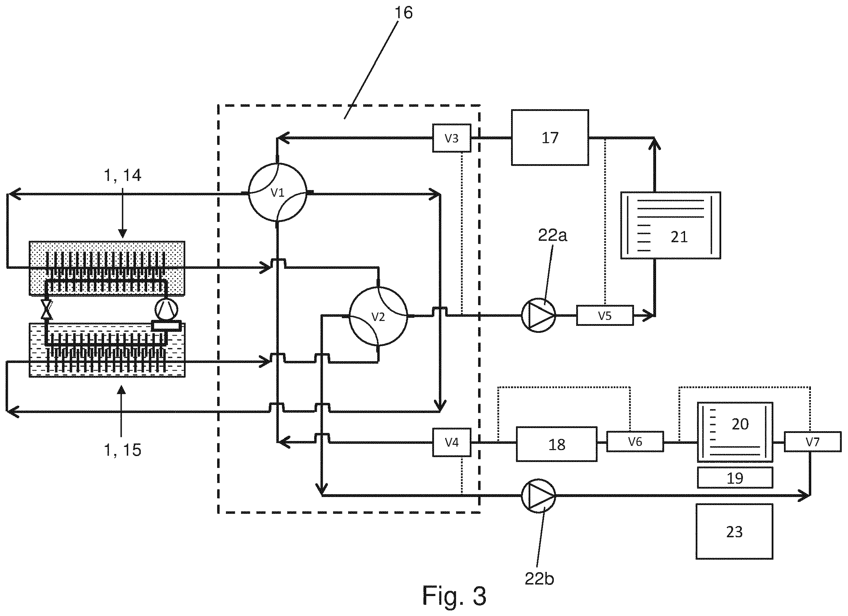

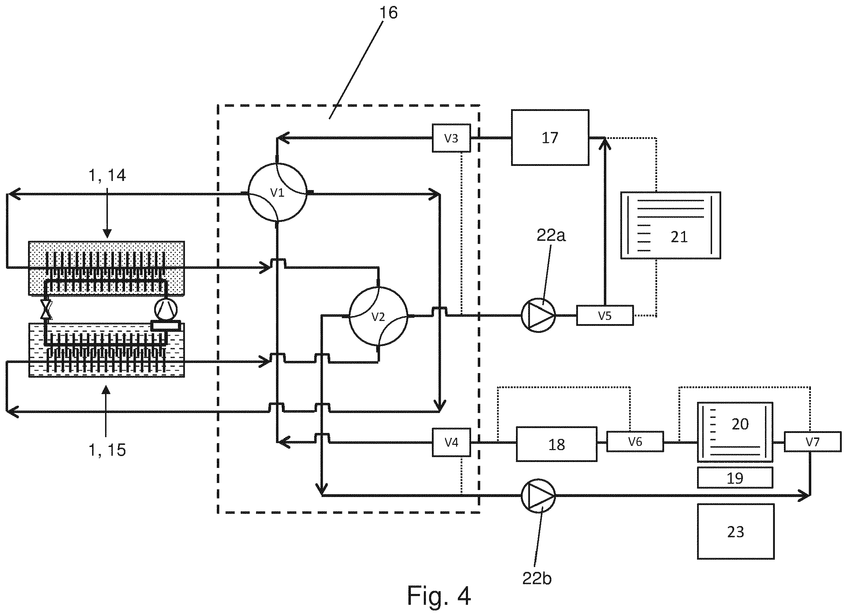

In Fig. 2 bis Fig. 4 ist schematisch die Integration einer Wärmepumpenanordnung 1 in ein Thermomanagementsystem eines Fahrzeugs, genauer eines Elektrofahrzeugs, dargestellt, wobei der Hochdruck-Kältemittelwärmetauscher 4 über den Hochtemperatur-Latentwärmespeicher 10 und den Hochtemperatur-Kühlmittelwärmetauscher 9 und der Niederdruck-Kältemittelwärmetauscher 6 über den Niedertemperatur-Latentwärmespeicher 12 und den Niedertemperatur-Kühlmittelwärmetauscher 11 je nach Betriebsmodus wahlweise mit einem Kühlkreislauf oder einem Heizkreislauf des Fahrzeugs gekoppelt werden können. In Fig. 3 ist schematisch die Funktion der Wärmepumpenanordnung 1 bei aktivem Kühlkreislauf und in Fig. 4 ist schematisch die Funktion die Wärmepumpenanordnung 1 bei aktivem Heizkreislauf dargestellt.

Eine Hochdruckseite 14 der Wärmepumpenanordnung 1 stellt dabei warmes Kühlmittel zur Verfügung und eine Niederdruckseite 15 der Wärmepumpenanordnung 1 stellt kaltes Kühlmittel zur Verfügung. Folgende Komponenten und Baugruppen sind fahrzeugseitig thermisch zu konditionieren:
- Ein elektrischer Antriebstrang 17 (Motor, Leistungselektronik, Lader und je nach Anwendung auch Getriebe) erzeugt im Betrieb Abwärme, die durch das Thermomanagementsystem abgeführt werden muss.
- Eine Batterie 18 erzeugt im Betrieb und während Ladevorgängen einerseits Abwärme, welche ebenfalls durch geeignete Kühlung kompensiert werden muss. Zum Beispiel bei Kaltstartbedingungen im Winter kann die Batterie aber auch durch das Thermomanagementsystem beheizt werden.
- Ein Fahrgastraum 23 wird über die sogenannte "HVAC-Box" mit warmer oder kalter Luft versorgt, die über Ausströmdüsen in das Innere des Fahrgastraums geblasen wird. Die dafür nötige Kühl- oder Heizleistung wird in Fig. 2 über einen Wärmeübertrager 20 erzielt, welcher je nach Anforderung mit heißem oder kaltem Kühlmittel durchströmt werden kann.
- Ein Radiator 21 im Vorderbau des Fahrzeugs wird mit Luft durchströmt und führt überschüssige Wärme aus dem Thermomanagementsystem an die Umgebung ab.
- Zwei Pumpen 22a, 22b sorgen für den zum Betrieb erforderlichen Kühlmittel-Massenstrom.
- Ein zusätzlicher luftseitiger elektrischer Zuheizer 19 in der "HVAC-Box" wird im Entfeuchtungsbetrieb der Klimaanlage dazu verwendet, die erst im Wärmeübertrager 20 abgekühlte Luft (um Kondensation der Luftfeuchte zu erzielen) wieder auf die gewünschte Einströmtemperatur in den Fahrgastraum 23 zu erwärmen. Zusätzlich liefert der elektrische Zuheizer 19 eine "Backup"-Lösung für Situationen, in denen im Winter nicht genügend Heizleistung durch die Wärmepumpenanordnung 1 zur Verfügung stehen sollte oder ein besonders schnelles Aufwärmen des Fahrgastraums 23 erwünscht ist.

Alle diese Heiz- und Kühlanforderungen werden in Fig. 2 durch die Wärmepumpenanordnung 1 dargestellt. Die dafür notwendigen Verbindungen zwischen Wärmequellen und Wärmesenken werden dabei durch einen zentralen Ventilblock 16 dargestellt. Dieser beinhaltet zwei 4-Wege-Rotationsventile V1, V2, welche alle erforderlichen Betriebsmodi durch jeweils gemeinsame Drehung darstellen können, sodass eine gemeinsame Ansteuerung dieser 4-Wege-Rotationsventile V1, V2 über nur einen Aktuator möglich ist. Weiterhin beinhaltet der Ventilblock 16 zwei 3-Wege-Ventile V3, V4, welche die in Fig. 2 rechts davon befindlichen Systemzweige vom Rest des Thermomanagementsystems abkoppeln können. Drei weitere 3-Wege Ventile V5, V6, V7 innerhalb der Systemzweige ermöglichen das Überbrücken einzelner Systemkomponenten, wenn deren Durchströmung mit Kühlmittel nicht erforderlich oder erwünscht ist.

Fig. 3 zeigt nun die Anwendung der Wärmepumpenanordnung 1 zur Kühlung des Fahrgastraums 23 und der Batterie 18. Die Niederdruckseite 14 der Wärmepumpenanordnung 1 stellt hier kaltes Kühlmittel zur Verfügung, welches über das Ventil V2 und eine Kühlmittelpumpe 22b in den Wärmeübertrager 20 geleitet wird. Dort kühlt sich die in den Fahrgastraum 23 strömende Luft ab und ermöglicht so eine Kühlung des Fahrgastraums 23. Das aus diesem Wärmeübertrager 20 weiterströmende Kühlmittel ist entsprechend etwas aufgewärmt (es hat Wärme aus der Luft aufgenommen), ist aber immer noch kühl genug, um eine Kühlung der Batterie 18 des Fahrzeuges bereitzustellen. Danach wird das aufgewärmte Kühlmittel über das 3-Wege-Ventil V4 und das 4-Wege-Rotationsventil V1 wieder zurück auf die Niederdruckseite 15 der Wärmepumpenanordnung 1 geleitet, wo die aufgenommene Wärme an den Kreislauf der Wärmepumpenanordnung 1 abgegeben wird und sich der Kreis schließt. Auf der Hochdruckseite 14 der Wärmepumpenanordnung 1 wird diese Wärme als heißes Kühlmittel über das 4-Wege-Rotationsventil V2 und die Kühlmittelpumpe 22a and den Radiator 21 des Fahrzeugs geleitet, wo sie an die Umgebung abgeführt wird. Das so abgekühlte Kühlmittel wird danach zur Kühlung des Antriebstranges 17 des Fahrzeugs herangezogen und über das 3-Wege-Ventil V3 und das 4-Wege-Rotationsventil V1 wieder zurück an die Hochdruckseite 14 der Wärmepumpenanordnung 1 geleitet. Dort schließt sich auch dieser Kreis des Kühlsystems.

Fig. 4 zeigt die Anwendung zur Heizung des Fahrgastraums 23 und optional der Batterie 18. Dazu wird heißes Kühlmittel von der Hochdruckseite 14 der Wärmepumpenanordnung 1 über das nun um 90° gedrehte 4-Wege-Rotationsventil V2 und die Kühlmittelpumpe 22b and den Wärmeübertrager 20 geleitet. Dort gibt das Kühlmittel Wärme an die in den Fahrgastraum 23 einströmende Luft ab und sorgt so für eine Heizung eben dieser. Danach kann die verbleibende Wärme im Kühlmittel entweder zur Heizung der Batterie 18 genutzt werden, oder die Batterie 18 kann auch über das 3-Wege-Ventil V6 umgangen werden, wenn kein Heizbedarf besteht. Danach strömt das Kühlmittel über das 3-Wege-Ventil V4 und das 4-Wege-Rotationsventil V1 und wieder zurück zur Hochdruckseite 14 der Wärmepumpenanordnung 1, wo neue Wärme aufgenommen wird und der Kreislauf sich schließt. Auf der Niederdruckseite 15 der Wärmepumpenanordnung 1 strömt kaltes Kühlmittel über das 4-Wege-Rotationsventil V2 und die Kühlmittelpumpe 22a durch den Antriebstrang 17 des Fahrzeugs, wo Abwärme aufgenommen wird. Das so aufgewärmte Kühlmittel wird über das 3-Wege-Ventil V3 und das 4-Wege-Rotationsventil V1 wieder zur Niederdruckseite 15 der Wärmepumpenanordnung 1 zurückgeleitet, wo diese Abwärme an die Wärmepumpenanordnung 1 abgegeben wird und den nötigen Wärmeeintrag für die Heizung des Fahrgastraums 23 und der Batterie 18 liefert. Bei ausreichend warmen Umgebungsbedingungen kann zusätzlich in diesem Kreislauf der Radiator 21 durchströmt werden, um weitere Wärme aus der Umgebung aufzunehmen und der Wärmepumpenanordnung 1 zuzuführen.

### Bezugszeichenliste

- 1: Wärmepumpenanordnung
- 2: Kältemittelkreislauf
- 3: Turbokompressor
- 4: Hochdruck-Wärmetauscher
- 5: Expansionselement
- 6: Niederdruck-Wärmetauscher
- 7: Niederdruckeingang
- 8: Hochdruckausgang
- 9: Hochtemperatur-Kühlmittelwärmetauscher
- 10: Hochtemperatur-Latentwärmespeicher
- 11: Niedertemperatur-Kühlmittelwärmetauscher
- 12: Niedertemperatur-Latentwärmespeicher
- 13: Kältemittel-Ausgleichsbehälter
- 14: Hochdruckseite (der Wärmepumpenanordnung)
- 15: Niederdruckseite (der Wärmepumpenanordnung)
- 16: Zentraler Ventilblock
- 17: Antriebsstrang
- 18: Batterie
- 19: Elektrischer Zuheizer (luftseitig)
- 20: Wärmeübertrager
- 21: Radiator
- 22a, 22b: Pumpe
- 23: Fahrgastraum

- V1, V2: 4-Wege-Rotationsventil
- V3, V4, V5, V6, V7: 3-Wege-Ventil

## Patentansprüche

1. Wärmepumpenanordnung (1) für ein Thermomanagementsystem eines Hybrid- oder Elektrofahrzeugs umfassend einen Kältemittelkreislauf (2), wobei der Kältemittelkreislauf (2)
- einen Strömungspfad für ein Kältemittel,
- einen Kompressor (3) zur Verdichtung des Kältemittels von einem Niederdruckniveau auf ein Hochdruckniveau,
- einen Hochdruck-Kältemittelwärmetauscher (4) zur Abgabe von Wärme des Kältemittels, wobei der Hochdruck-Kältemittelwärmetauscher (4) in einen Hochtemperatur-Latentwärmespeicher (10) integriert ist,
- ein Expansionselement (5) zur Entspannung des gekühlten Kältemittels auf das Niederdruckniveau und
- einen Niederdruck-Kältemittelwärmetauscher (6) zur Aufnahme von Wärme des Kältemittels, wobei der Niederdruck-Kältemittelwärmetauscher (6) in einen Niedertemperatur-Latentwärmespeicher (12) integriert ist,
**dadurch gekennzeichnet, dass** die notwendigen Verbindungen zwischen Wärmequellen und Wärmesenken durch einen zentralen Ventilblock (16) dargestellt werden, wobei der zentrale Ventilblock zwei 4-Wege-Rotationsventile (V1, V2) beinhaltet, welche alle erforderlichen Betriebsmodi durch jeweils gemeinsame Drehung darstellen können.

2. Wärmepumpenanordnung (1) nach Anspruch 1,
**dadurch gekennzeichnet, dass** der Ventilblock (16) zwei 3-Wege-Ventile (V3, V4) aufweist, welche Systemzweige vom Rest des Thermomanagementsystems an- und abkoppeln.

3. Wärmepumpenanordnung (1) nach Anspruch 1 oder 2,
**dadurch gekennzeichnet, dass** drei weitere 3-Wege-Ventile innerhalb der Systemzweige das Überbrücken einzelner Systemkomponenten ermöglichen, wenn deren Durchströmung mit Kühlmittel nicht erforderlich oder erwünscht ist.

4. Wärmepumpenanordnung (1) nach einem der vorhergehenden Ansprüche, **dadurch gekennzeichnet, dass** der Kompressor (3) als Turbokompressor ausgeführt ist.

5. Wärmepumpenanordnung (1) nach einem der vorhergehenden Ansprüche, **dadurch gekennzeichnet, dass** der Hochtemperatur-Latentwärmespeicher (10) mit einem Heizkreislauf gekoppelt ist, über den zumindest ein Fahrgastraum (23) des Fahrzeugs erwärmbar ist.

6. Wärmepumpenanordnung (1) nach Anspruch 5,
**dadurch gekennzeichnet, dass** der Heizkreislauf einen Hochtemperatur-Kühlmittelwärmetauscher (9) aufweist, der in dem Hochtemperatur-Latentwärmespeicher (10) mit dem Hochdruck-Kältemittelwärmetauscher (4) gekoppelt ist.

7. Wärmepumpenanordnung (1) nach einem der Ansprüche 1 bis 6,
**dadurch gekennzeichnet, dass** der Niedertemperatur-Latentwärmespeicher (12) mit einem Kühlkreislauf gekoppelt ist, über den zumindest ein Fahrgastraum (23) des Fahrzeugs kühlbar ist.

8. Wärmepumpenanordnung (1) nach Anspruch 7,
**dadurch gekennzeichnet, dass** der Kühlkreislauf einen Niedertemperatur-Kühlmittelwärmetauscher (11) aufweist, der in dem Niedertemperatur-Latentwärmespeicher (12) mit dem Niederdruck-Kältemittelwärmetauscher (6) gekoppelt ist.

## Claims

1. Heat pump assembly (1) for a thermal management system of a hybrid or electric vehicle, comprising a refrigerant circuit (2), wherein the refrigerant circuit (2)
- a flow path for a refrigerant,
- a compressor (3) for compressing the refrigerant from a low pressure level to a high pressure level,
- a high-pressure refrigerant heat exchanger (4) for dissipating heat from the refrigerant, the high-pressure refrigerant heat exchanger (4) being integrated into a high-temperature latent heat accumulator (10),
- an expansion element (5) for expanding the cooled refrigerant to the low pressure level and
- a low-pressure refrigerant heat exchanger (6) for absorbing heat from the refrigerant, the low-pressure refrigerant heat exchanger (6) being integrated into a low-temperature latent heat accumulator (12),
**characterized in that** the necessary connections between heat sources and heat sinks are represented by a central valve block (16), the central valve block comprising two 4-way rotary valves (V1, V2), which can represent all the required operating modes by joint rotation.

2. Heat pump assembly (1) according to Claim 1, **characterized in that** the valve block (16) has two 3-way valves (V3, V4), which couple and decouple system branches from the rest of the thermal management system.

3. Heat pump assembly (1) according to Claim 1 or 2,
**characterized in that** three further 3-way valves within the system branches allow bridging of individual system components if it is not necessary or desired for coolant to flow through the system components.

4. Heat pump assembly (1) according to any of the preceding claims,
**characterized in that** the compressor (3) is designed as a turbo compressor.

5. Heat pump assembly (1) according to any of the preceding claims,
**characterized in that** the high-temperature latent heat accumulator (10) is coupled to a heating circuit via which at least one passenger compartment (23) of the vehicle can be heated.

6. Heat pump assembly (1) according to Claim 5,
**characterized in that** the heating circuit has a high-temperature coolant heat exchanger (9) which, in the high-temperature latent heat accumulator (10), is coupled to the high-pressure refrigerant heat exchanger (4).

7. Heat pump assembly (1) according to any of Claims 1 to 6,
**characterized in that** the low-temperature latent heat accumulator (12) is coupled to a cooling circuit via which at least one passenger compartment (23) of the vehicle can be cooled.

8. Heat pump assembly (1) according to Claim 7,
**characterized in that** the cooling circuit has a low-temperature coolant heat exchanger (11) which, in the low-temperature latent heat accumulator (12), is coupled to the low-pressure refrigerant heat exchanger (6).

## Revendications

1. Ensemble pompe à chaleur (1) pour un système de gestion thermique d'un véhicule hybride ou électrique, comprenant un circuit (2) de fluide frigorigène, le circuit (2) de fluide frigorigène
- un circuit d'écoulement pour un fluide frigorigène,
- un compresseur (3) pour comprimer le fluide frigorigène d'un niveau de basse pression à un niveau de haute pression,
- un échangeur de chaleur (4) à fluide frigorigène à haute pression pour libérer la chaleur du fluide frigorigène, l'échangeur de chaleur (4) à fluide frigorigène à haute pression étant intégré dans un accumulateur de chaleur latente (10) à haute température,
- un élément de détente (5) pour détendre le fluide frigorigène refroidi jusqu'au niveau de basse pression, et
- un échangeur de chaleur (6) à fluide frigorigène à basse pression destiné à absorber la chaleur du fluide frigorigène, l'échangeur de chaleur (6) à fluide frigorigène à basse pression étant intégré dans un accumulateur de chaleur latente (12) à basse température, **caractérisé en ce que** les connexions nécessaires entre les sources de chaleur et les puits de chaleur sont représentées par un bloc de vannes central (16), le bloc de vannes central comprenant deux vannes rotatives à 4 voies (V1, V2) qui sont aptes à représenter tous les modes de fonctionnement nécessaires par une rotation commune respective.

2. Ensemble pompe à chaleur (1) selon la revendication 1,
**caractérisé en ce que** le bloc de vannes (16) comprend deux vannes à 3 voies (V3, V4) qui relient des branches du système au reste du système de gestion thermique et qui séparent ces branches de ce système.

3. Ensemble pompe à chaleur (1) selon la revendication 1 ou la revendication 2,
**caractérisé en ce que** trois autres vannes à 3 voies à l'intérieur des branches du système permettent de bypasser des composants individuels du système lorsque leur alimentation en fluide frigorigène n'est pas nécessaire ou n'est pas souhaitée.

4. Ensemble pompe à chaleur (1) selon l'une des revendications précédentes,
**caractérisé en ce que** le compresseur (3) est réalisé la sous forme d'un turbocompresseur.

5. Ensemble pompe à chaleur (1) selon l'une des revendications précédentes,
**caractérisé en ce que** l'accumulateur de chaleur latente (10) à haute température est relié à un circuit de chauffage qui permet de chauffer au moins l'habitacle (23) du véhicule.

6. Ensemble pompe à chaleur (1) selon la revendication 5,
**caractérisé en ce que** le circuit de chauffage comprend un échangeur de chaleur (9) à haute température pour le fluide frigorigène, qui est relié à l'échangeur de chaleur (4) à fluide frigorigène à haute pression dans l'accumulateur de chaleur latente (10) à haute température.

7. Ensemble pompe à chaleur (1) selon l'une des revendications 1 à 6,
**caractérisé en ce que** l'accumulateur de chaleur latente (12) à basse température est relié à un circuit de refroidissement qui permet de refroidir au moins l'habitacle (23) du véhicule.

8. Ensemble pompe à chaleur (1) selon la revendication 7,
**caractérisé en ce que** le circuit de refroidissement comprend un échangeur de chaleur (11) à fluide frigorigène à basse température qui est relié à l'échangeur de chaleur (6) à fluide frigorigène à basse pression dans l'accumulateur de chaleur latente (12) à basse température.
